# EUROPEAN PATENT SPECIFICATION

(11) **EP 2 119 026 B1**
(45) Date of publication and mention of the grant of the patent: **07.03.2018**
(21) Application number: 08701672.1
(22) Date of filing: 25.01.2008
(51) Int. Cl.: H04B 1/69

(54) **ULTRA-WIDEBAND MODE SELECTION**
ULTRABREITBANDMODUSWAHL
SÉLECTION DE MODE ULTRALARGE BANDE

(30) Priority: 25.01.2007 US 886594 P; 21.03.2007 US 689376
(43) Date of publication of application: 18.11.2009
(73) Proprietor: Telefonaktiebolaget LM Ericsson (publ), 164 83 Stockholm (SE)
(72) Inventor: HAARTSEN, Jacobus, 7772 BG Hardenberg (NL)
(74) Representative: Ericsson
(86) International application number: PCT/EP2008/050875
(87) International publication number: WO 2008/090212

(56) References cited:
- WO-A-2006/091683
- US-A1- 2006 008 016
- SHETTY, SIDDHARTH; AIELLO, ROBERTO: "Detect and Avoid (DAA) Techniques - Enabler for Worldwide Ultrawideband Regulations" ULTRA WIDEBAND SYSTEMS, TECHNOLOGIES AND APPLICATIONS, 2006. THE INSTITUTION OF ENGINEERING AND TECHNOLOGY SEMINAR ON, [Online] 20 April 2006 (2006-04-20), pages 21-29, XP002445528 London, UK ISBN: 0-86341-625-X Retrieved from the Internet: URL:http://ieeexplore.ieee.org/iel5/412361 2/4123613/04123621.pdf?tp=&arnumber=412362 1&isnumber=4123613> [retrieved on 2007-08-02]
- ANNALISA DURANTINI ET AL: "Performance Evaluation of Detect and Avoid Procedures for Improving UWB Coexistence with UMTS and WiMAX systems" ULTRA-WIDEBAND, THE 2006 IEEE 2006 INTERNATIONAL CONFERENCE ON, IEEE, PI, September 2006 (2006-09), pages 501-506, XP031007186 ISBN: 1-4244-0101-1
- SOMAYAZULU V S ET AL: "Detect and Avoid (DAA) Mechanisms for UWB Interference Mitigation" ULTRA-WIDEBAND, THE 2006 IEEE 2006 INTERNATIONAL CONFERENCE ON, IEEE, PI, September 2006 (2006-09), pages 513-518, XP031007188 ISBN: 1-4244-0101-1

## Description

### BACKGROUND

The present invention relates to telecommunications, and more particularly to methods and apparatuses for dynamically determining an advantageous mode of operation of a communications device that is capable of operating in any one of several different transmission modes.

Modern communications devices, such as User Equipment (UE) for use in mobile telecommunication systems, are designed to satisfy numerous requirements and operating constraints. One such requirement, which is typically imposed by standardization bodies, requires the UE to operate in a manner that reduces the likelihood that the UE's transmissions will interfere with the operation of other communications equipment.

An example of an operating constraint is the need to conserve, as much as possible, operating power consumption. This constraint is especially important in small battery-operated devices, since the user's satisfaction with the device is greatly influenced by how often the device needs to be recharged.

There is frequently a tradeoff between satisfying standards-imposed requirements and practical operating constraints because satisfying one may negatively influence satisfaction of the other. This situation can arise in the context of communication equipment operating in accordance with any of a number of different standards to which the invention is applicable. As one non-limiting example, consider that in February 2002, the U.S. Federal Communications Commission (FCC) approved a new spectrum rule, allowing new radio technologies to operate in the frequency range 3.1-10.6 GHz. Instead of having a fixed allocation of radio bands, the new radio transmissions are spread over huge bandwidths and overlap with existing services. This can be accomplished by the use of so-called Ultra-Wideband (UWB) modulation techniques. A signal is denoted as UWB when it either has a bandwidth of at least 500 MHz, or has a fractional bandwidth larger than 0.2. The transmit power is spread over a large frequency range, resulting in a low Power Spectral Density (PSD) which is measured in dBm/MHz. The emission levels established by the FCC are rather low, which greatly limits the transmission range of UWB radio systems. UWB systems are therefore typically used in short-range systems providing Wireless Personal Area Networking (WPAN).

UWB emissions may interfere with communications associated with other systems also operating in the 3.1-10.6 GHz band. However, these so-called victim systems have much smaller bandwidths and will experience the UWB emission as an increase in the noise floor. Systems that will be impacted by the UWB emission are Fixed Services that don't provide mobility (e.g., Fixed Wireless Access and Wireless Local Loop) and Worldwide Interoperability for Microwave Access (WiMAX) services (IEEE 802.16) operating at 3.4 GHz, Wireless Local Area Network (WLAN) at 5 GHz, and new cellular systems (e.g., IMT-Advance) that may likely use frequencies between 4 and 5 GHz. Because of the potential for interference, the regulations established by the European Community governing the use of UWB in Europe are much stricter than comparable regulations in the United States. In particular, the incumbent services operating in Europe at frequencies below 6 GHz will obtain extra protection in the form of mitigation techniques that must be applied by UWB equipment to prevent disturbance of incumbent communication systems. Two mitigation techniques are currently under consideration:
- Low Duty Cycle (LDC): In this operating mode, the UWB transmitter is permitted to engage in only limited activity when averaged over a second or an hour.
- Detect-And-Avoid (DAA): In this operating mode, the UWB device must scan the frequency spectrum for the purpose of identifying and consequently avoiding the frequency segments that are in use by victim services.

The standards require that the maximum output PSD of a UWB transmitter be limited to -41.3dBm/MHz. This maximum power may be used if no victim service is detected in a DAA system, or at any time in an LDC system. In a bandwidth of about 500 MHz (e.g., the bandwidth used by WiMedia's Multi-Band OFDM system which was recently standardized by the European Computer Manufacturers Association, or "ECMA"), this restriction means that the maximum output power will be on the order of only 10's of *µ* Ws. Such a low level of output power permits only very short distances to be covered. However, when a victim service has been detected in DAA mode, the maximum PSD has to be reduced to just -70dBm/MHz or lower. This is too low to provide any useful coverage. In DAA systems, the system would typically respond by switching to a band that is still considered to be free (WiMedia has defined three bands, each 528 MHz wide, in the range 3.1- 4.8 GHz). However, finding a new band takes time, especially if the bands beyond 6 GHz have to be scanned as well. In addition, there is no guarantee that a free band will be found. Since the UWB device must free up the occupied band even if no new band is found (or at least must reduce its PSD to below -70dBm/MHz), there will be a discontinuity in the UWB service. For services with Quality of Service (QoS) requirements, this will be unacceptable and will lead to a drop of the UWB link.

As mentioned earlier, LDC systems may operate at the permitted maximum output power regardless of whether there exist any victim systems. However, such systems have their own limitations. For example, UWB regulations approved in the European Community permit UWB devices operating in the 3.4 - 4.8 GHz range to transmit up to -41.3dBm/MHz only so long as the following conditions are met:

**Table 1: Requirements for LDC operation**

| Parameter | Definition | Condition |
|---|---|---|
| T_{on_max} | Maximum duration of the UWB burst | 5ms |
| T_{off_mean} | Mean silence time averaged in 1 s | > 38ms |
| T_{off_accum} | Total silence time accumulated in 1s | > 950ms |
| T_{on_accum_1s} | Activity factor within 1s | < 5% |
| T _{on_accum_1H} | Activity factor within 1 hour | < 0.5% |

These limitations prevent services with certain QoS requirements (e.g., streaming video) from operating in an LDC system.

Annalisa Durantini et al, "Performance Evaluation of Detect and Avoid Procedures for Improving UWB Coexistence with UMTS and WiMAX systems" ULTRA-WIDEBAND, THE 2006 IEEE 2006 INTERNATIONAL CONFERENCE ON, IEEE, PI, September 2006, pages 501-506, XP031007186 ISBN: 1-4244-0101-1 discloses a DAA procedure that is split into a ranging mode, an ordinary mode, and a hold-off (or idle) mode. All of these modes support the DAA mode of operation. During ranging, only control signaling messages are exchanged. To avoid interference of UWB transmissions during ranging, the UWB power is limited so that the UWB transmitter will not disturb the victim receivers WiMAX or UMTS. The UWB transmitter uses full power only after detecting that there are no victims. During the idle or hold-off mode, the UWB transmission is completely turned off in order to allow a victim to recover from interference (or to start access free from interference).

Siddharth Shetty and Roberto Aiello, "Detect and Avoid (DAA) Techniques - Enabler for Worldwide Ultrawideband Regulations", ULTRA WIDEBAND SYSTEMS, TECHNOLOGIES AND APPLICATIONS, 2006, THE INSTITUTION OF ENGINEERING AND TECHNOLOGY SEMINAR ON, 20 April 2006, pages 21-29, XP002445528 London, UK ISBN: 0-86341-625-X discloses the regulatory background concerning proposals for UWB devices to employ DAA strategies for interference mitigation, the difficulty in setting parameters, and complexity involved in the practical implementation of such techniques while maintaining commercial viability for UWB radios. The disclosed implementation details relate to DAA. Restriction of duty cycle is mentioned in this document's Table 1 in connection with European Union proposals for the UWB low band.

WO 2006/091683 A (STACCATO COMMUNICATIONS INC [US]) 31 August 2006 discloses communication of interference mitigation related information between wireless devices. The disclosed interference mitigation techniques all involve some form of DAA technique, such as by avoiding a certain frequency or transmission time. Interference mitigation information may be exchanged with other wireless devices to improve interference mitigation.

It is therefore desired to provide methods and apparatuses that permit a UWB device to remain functional under various conditions (e.g., regardless of whether there are QoS requirements) and also to conserve energy.

### SUMMARY

It should be emphasized that the terms "comprises" and "comprising", when used in this specification, are taken to specify the presence of stated features, integers, steps or components; but the use of these terms does not preclude the presence or addition of one or more other features, integers, steps, components or groups thereof.

In accordance with one aspect of the present invention, the foregoing and other objects are achieved in methods and apparatuses for operating a device that uses Ultra-Wideband modulation techniques. Such devices include, but are not limited to, sensors that wirelessly communicate sensor data, and mobile user equipment. Operating the device involves operating the device in a low duty cycle mode in which an amount of time during which the device is permitted to transmit a signal is limited. In response to ascertaining that a high-throughput service is to be performed, the device is operated in a detect and avoid mode in which the device is permitted to transmit continuously on a selected frequency band at a maximum output power until a victim service is detected operating on the selected frequency band.

In another aspect, in response to the victim service being detected operating on the selected frequency band, the device is again operated in the low duty cycle mode while attempting to identify another frequency band in which to operate the device in the detect and avoid mode.

In alternative embodiments, in response to the victim service being detected operating on the selected frequency band, an attempt is made for a limited time to identify another frequency band in which to operate the device in the detect and avoid mode while continuing to operate the device in the detect and avoid mode on the selected frequency band. In response to expiration of the limited time without another frequency band being identified, the device is again operated in the low duty cycle mode. In another aspect, again operating the device in the low duty cycle mode can, in some embodiments, comprise again attempting to identify another frequency band in which to operate the device in the detect and avoid mode.

In still other aspects, again operating the device in low duty cycle mode comprises maintaining a comparable quality of service experience to a user by engaging any of a number of possible measures (either alone or in any combination). Such measures include, but are not limited to: using a slower data exchange rate; increasing an amount of data compression; increasing an order of modulation; and rearranging a resource allocation among a plurality of other devices with which the device is communicating. Rearranging the resource allocation among the plurality of other devices with which the device is communicating can comprise, for example, allocating most of a channel capacity to services having quality of service requirements. It can also comprise, for example, suspending best effort services.

In yet another aspect, in response to detecting that the high-throughput service has terminated, the device is again operated in the low duty cycle mode.

### BRIEF DESCRIPTION OF THE DRAWINGS

The objects and advantages of the invention will be understood by reading the following detailed description in conjunction with the drawings in which:
FIG. 1 is a block diagram of an exemplary UWB device capable of operating in accordance with various aspects of the invention.
FIG. 2 is a flow diagram of exemplary steps/processes carried out by mode control logic in a UWB device in accordance with aspects of the invention.
FIG. 3 is a flow diagram of exemplary steps/processes carried out by mode control logic in an alternative embodiment of a UWB device in accordance with aspects of the invention.

### DETAILED DESCRIPTION

The various features of the invention will now be described with reference to the figures, in which like parts are identified with the same reference characters.

The various aspects of the invention will now be described in greater detail in connection with a number of exemplary embodiments. To facilitate an understanding of the invention, many aspects of the invention are described in terms of sequences of actions to be performed by elements of a computer system or other hardware capable of executing programmed instructions. It will be recognized that in each of the embodiments, the various actions could be performed by specialized circuits (e.g., discrete logic gates interconnected to perform a specialized function), by program instructions being executed by one or more processors, or by a combination of both. Moreover, the invention can additionally be considered to be embodied entirely within any form of computer readable carrier, such as solid-state memory, magnetic disk, optical disk or carrier wave (such as radio frequency, audio frequency or optical frequency carrier waves) containing an appropriate set of computer instructions that would cause a processor to carry out the techniques described herein. Thus, the various aspects of the invention may be embodied in many different forms, and all such forms are contemplated to be within the scope of the invention. For each of the various aspects of the invention, any such form of embodiments may be referred to herein as "logic configured to" perform a described action, or alternatively as "logic that" performs a described action.

Aspects of embodiments consistent with the invention provide a smooth transition between a continuous mode of UWB device operation (utilizing DAA techniques) and an LDC mode of operation. In the LDC mode, the maximum output power can be maintained irrespective of the presence of victim services. Operation in the LDC can advantageously be used to reduce power consumption and to guarantee continuity of the UWB link. Operation of the UWB device changes to DAA mode when QoS requirements cannot be satisfied in the LDC mode.

Although the duty cycle is quite low in LDC mode (e.g., down to 0.5%), the instantaneous bit rate of UWB technology is so high that throughput rates of more than 1 Mb/s can still be maintained even under LDC conditions. Therefore, in another aspect of embodiments consistent with the invention, an existing link does not have to be dropped while the DAA mechanism is looking for a better spectrum. Extra compression or muting/hiding techniques can be applied during the LDC operation to provide the user with the QoS experience as enjoyed before.

In preferred embodiments, the default mode of operation of the UWB device is the LDC mode, thus restricting its duty cycle. Only in response to a high throughput service being requested does the device engage the DAA mechanism, find a suitable, free band, and start the high throughput service.

These and other aspects will now be described in greater detail.

The inventor of the subject matter described and claimed herein has recognized that, since the instantaneous UWB data rate is very high (e.g., 480 Mb/s for WiMedia, and exceeding 1 Gb/s for advanced versions), the average throughput is still considerably above 1 Mb/s even at the low duty cycles that are compatible with LDC mode. Moreover, the low duty cycle in LDC mode keeps its power consumption low.

Therefore, preferably, the UWB transmitter operates in a manner that causes its transmissions to be scheduled so as to satisfy the conditions of Table 1. The standby and low power modes are also preferably designed to conform to the LDC conditions.

If a higher throughput is desired, the UWB device responds by engaging the DAA mechanism. This involves scanning the spectrum to identify those regions where incumbent services are active. While scanning, the UWB device adheres to the LDC conditions so that it can maintain a link via that mechanism. When a suitable band is found, the UWB device preferably provides information about the new band to all other UWB devices to which it is connected by means of UWB transmissions, still using a channel that abides to the LDC rules.

When in the high-throughput mode, the UWB device periodically scans the spectrum it uses for any activity. In some embodiments, if activity is detected, the UWB device switches back to the LDC mode. In that case, services that are currently being supported may use a slower data exchange rate, more data compression, less coding, a higher order modulation, or a combination of these, in order to satisfy the LDC rules and yet maintain a comparable QoS experience to the user. If the UWB device is communicating with several UWB devices, it can in some embodiments also rearrange its allocation of resources, for example by giving the services with QoS requirements most of the channel capacity and releasing or suspending the best effort services. In the meantime, the UWB device starts scanning other spectrum parts and moves the connected units to a new frequency band if a free one is found. Then the UWB devices can switch back to the high-throughput mode.

Returning to the situation in which the UWB device, operating in high-throughput mode, detects activity on the band that it is using, in an alternative embodiment the UWB device does not immediately switch back to the LDC mode, but instead remains in the high-throughput mode for a limited period of time while it seeks a new band to switch to. This operation is permitted under present standards. Of course, if the UWB device is unable to find a free frequency band within the permitted period of time it then switches back to LDC mode and carries out the steps described above.

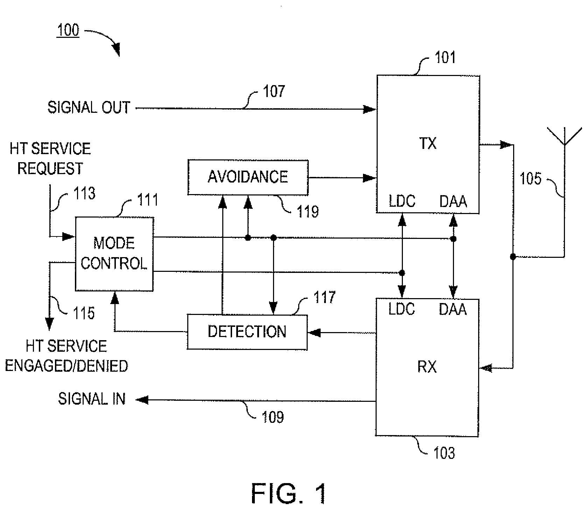

FIG. 1 is a block diagram of an exemplary UWB device 100 capable of operating in accordance with various aspects of the invention. The UWB device 100 includes transmission (TX) logic 101 and receive (RX) logic 103. The transmission logic 101 and receive logic 103 share an antenna 105. The transmission logic 101 includes logic 107 (indicated schematically as a line in FIG. 1) for receiving a signal to be transmitted from the antenna 105. The receive logic 103 includes logic 109 (indicated schematically as a line in FIG. 1) for supplying a signal received from a signal supplied by the antenna 105.

The transmission logic 101 and receive logic 103 are each adapted in known ways to be capable of operating in either an LDC mode or DAA mode, and each includes input ports for receive mode control signals which determine which of the modes is active at any given time. (To facilitate the description, separate control ports, "LDC" and "DAA", are illustrated. However, as these modes are mutually exclusive, a single control signal could be used to indicate which of the two modes is active.) The control signals supplied to the LDC and DAA ports are generated by mode control logic 111 (i.e., hardware alone or hardware in conjunction with a set of program instructions). An input control signal (e.g., HT service request 113) informs the mode control logic 111 that it should attempt to operate the UWB device 100 in high-throughput mode. The mode control logic 111 can further provide a signal (e.g., HT service engaged/denied 115) that indicates in what mode the UWB device 100 is operating. The mode control logic 111 can operate in any number of ways consistent with the various inventive aspects, and several exemplary embodiments are presented below. When the UWB device 100 is operating in high-throughput mode (or attempting to operate in high-throughput mode), it bases decisions on information (e.g., whether there exist any victim services) provided by detection logic 117 which in turn uses information provided by the receive logic 103 to generate the relevant information. Similarly, a decision to operate in high-throughput mode is communicated from the mode control logic 111 to avoidance logic 119, which is designed to control the transmission logic 101 in a way that will prevent interfering with a victim service. To facilitate its operation, the avoidance logic 119 may also receive relevant information from the detection logic 117.

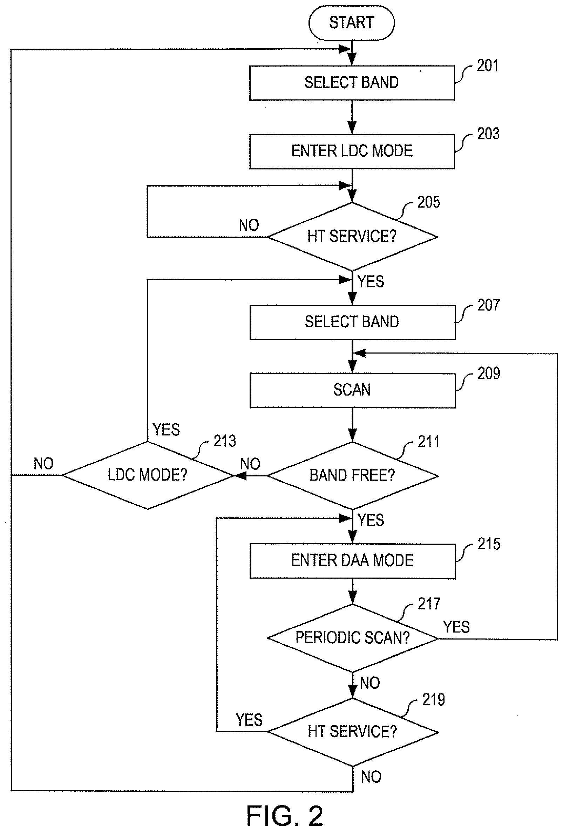

FIG. 2 is a flow diagram of exemplary steps/processes carried out by mode control logic 111 in a UWB device in accordance with aspects of the invention. Upon startup (and at other times too, as will be seen), the UWB device selects a frequency band for its operation in LDC mode (step 201). Selection may be performed in any of a number of different ways, none of which are essential to the invention. For example and without limitation, selection may be made at random or it may alternatively involve the UWB device first scanning to find a spectrum segment exhibiting the least amount of interference. Then the UWB device enters the LDC mode (using the selected frequency band) and applies that for all of its communications with other UWB devices (step 203).

Operation continues in LDC mode so long as it is not ascertained that a high-throughput service is to be performed ("NO" path out of decision block 205). When it is ascertained that a high-throughput service is to be performed ("YES" path out of decision block 205), a candidate frequency band is selected (which may be the same frequency band as the frequency band selected before) (step 207). The selected candidate frequency band is then scanned to detect activity by others (step 209).

If the band is considered to have too much activity to permit the UWB device to use it in DAA mode ("NO" path out of decision block 211), then a new candidate frequency band should be selected and tested. To avoid possibly breaking a link with another UWB device while this frequency band testing is being performed, the UWB device should be in LDC mode until a suitable frequency band for DAA mode is found. To accomplish this, a test is performed to ascertain whether the UWB device is presently in LDC mode (decision block 213). If it is ("YES" path out of decision block 213) the loop comprising steps 207, 209 and 211 is repeated.

If the UWB device is not presently in LDC mode ("NO" path out of decision block 213) (it will shortly be seen that the UWB device may enter this loop while already operating in DAA mode), processing reverts back to step 201 to enable selection of a frequency band for use in LDC followed by entry into LDC mode. Assuming it is still desired ("YES" path out of decision block 205), attempted entry into DAA mode then proceeds as described above (i.e., beginning at step 207). In some embodiments, it may be advantageous to avoid engaging in an endless loop by continuing this process until either a free frequency band is found or a timer has expired (not shown). Upon expiration of the timer, the user of the device can be notified that the requested high throughput service cannot presently be supported.

Returning to a discussion of decision block 211, if it is ascertained that the candidate frequency band is considered free ("YES" path out of decision block 211), the state of the UWB device changes to DAA mode to enable high-throughput operations (step 215).

While in DAA mode, at some point it will be time for a periodic scan of the selected frequency band to be performed (decision block 217) to ascertain whether there are any victim devices using the same frequency band. If it is time for a periodic scan ("YES" path out of decision block 217), processing returns to the scanning procedure beginning at step 209).

It will be appreciated that at this point, if the existing selected frequency band is no longer free, the UWB device, which had been in DAA mode, should switch back to LDC mode in order avoid breaking an existing link with other devices while it searches for a new frequency band. Thus, in this case ("NO" path out of decision block 213), processing will revert back to step 201. Even though the UWB device has switched back to LDC mode, it may be able to maintain the high-throughput service while it searches for a new "free" frequency band on which to resume operation in DAA mode. For example, high-throughput services that are currently being supported may use a slower data exchange rate, more data compression, less coding, a higher order modulation, or any combination of these, in order to satisfy the LDC rules and yet maintain a comparable QoS experience to the user. If the UWB device is communicating with several UWB devices, it can in some embodiments also rearrange its allocation of resources, for example by giving the services with QoS requirements most of the channel capacity and releasing or suspending the best effort services.

If periodic scanning is not being performed ("NO" path out decision block 217), the UWB device ascertains whether performance of the HT service is still desired (e.g., the service may have completed, or been terminated) (decision block 219). If the high-throughput service is still to be performed ("YES" path out of decision block 219), processing reverts back to step 215. Otherwise ("NO" path out of decision block 219), processing reverts back to step 201 to enable the state of the UWB device to switch back to LDC mode.

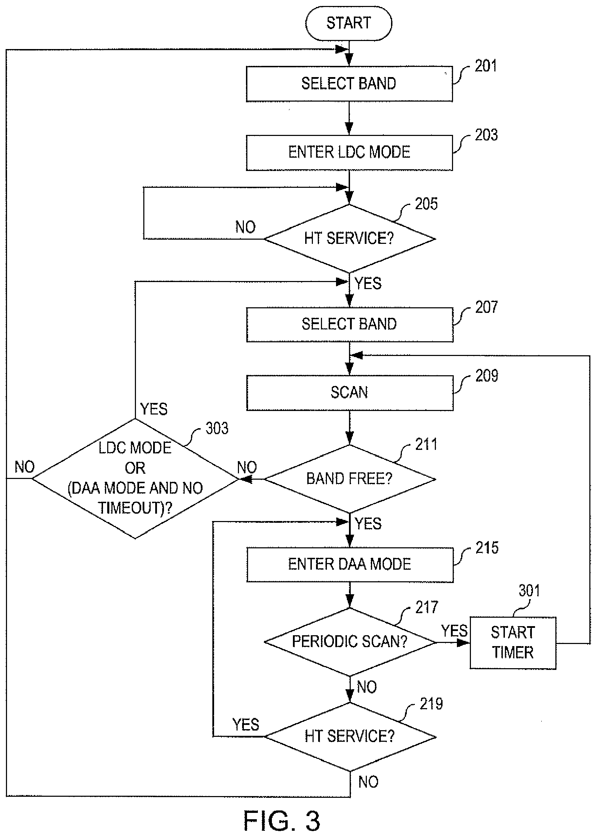

Considering again the situation in which the UWB device, operating in DAA mode, detects activity on the band that it is using, in an alternative embodiment the UWB device does not immediately switch back to the LDC mode, but instead remains in the DAA (high-throughput) mode for a limited period of time while it seeks a new band to switch to. This operation is permitted under present standards. Of course, if the UWB device is unable to find a free frequency band within the permitted period of time it then switches back to LDC mode and carries out the steps described above. FIG. 3 is a flowchart depicting steps/processes performed by mode control logic in the UWB device in accordance with aspects of this alternative embodiment.

Steps/processes 201, 203, 205, 207, 209, 211, 215, 217, and 219 are the same as those depicted in FIG. 2. Consequently, a description of these steps/processes is not repeated. It will be observed that one difference from the embodiment described with respect to FIG. 2 is the introduction of an additional step, namely step 301. Step 301, which causes a timer to be started, is performed when it is time for a periodic scan to be performed while in DAA mode ("YES" path out of decision block 217). As mentioned earlier, present regulations permit the UWB device to operate in DAA mode for a limited period of time after one or more victim devices has been detected. The timer enables the UWB device to know when this limited period of time has elapsed.

More specifically, after it is ascertained that a candidate frequency band is not considered free ("NO" path out of decision block 211), a test is performed to determine whether the UWB device is already in LDC mode, or whether it is in DAA mode without the timer having yet expired (decision block 303). If either of these conditions is true ("YES" path out of decision block 303), then the UWB device remains in whichever of the modes it is in and continues looking for a free frequency band to which it will start/switch further DAA operations by continuing processing at step 207.

If both conditions are false, however ("NO" path out of decision block 303) (i.e., the UWB device is in DAA mode with an expired timer), then it must revert back to LDC mode (processing continues at step 201) and continue operating as described earlier with respect to FIG. 2.

The various aspects described above allow a device to engage in UWB communication in a manner that allows continuous operation over a desired range (i.e., transmissions can maintain the maximum power output density of -41.3 dBm/MHz). Furthermore, the UWB device will also satisfy its QoS agreements if the bandwidth allows it. Moreover, the UWB device's operation can be made to conserve power, since its default operation can be in LDC, with operation in DAA mode taking place only when needed.

The invention has been described with reference to particular embodiments. However, it will be readily apparent to those skilled in the art that it is possible to embody the invention in specific forms other than those of the embodiment described above. The described embodiments are merely illustrative and should not be considered restrictive in any way. The scope of the invention is given by the appended claims, rather than the preceding description, and all variations and equivalents which fall within the range of the claims are intended to be embraced therein.

## Claims

1. A method of operating a device (100) that uses Ultra-Wideband modulation techniques, the method comprising:
operating the device in a Low Duty Cycle mode (203) in which an amount of time during which the device is permitted to transmit a signal is limited, such that the device is permitted to engage in only limited activity when averaged over a second or an hour;
ascertaining that a high-throughput service has been requested(205);
in response to ascertaining that the high-throughput service has been requested, operating the device in a Detect and Avoid mode (215) in which the device is permitted to transmit continuously on a selected frequency band at a maximum output power, to perform the requested high-throughput service, until a victim service is detected operating on the selected frequency band (211), and **characterised in that** in response to the victim service being detected operating on the selected frequency band, operating the device in the Low Duty Cycle mode, to perform the requested high-throughput service, while attempting to identify another frequency band in which to operate the device in the Detect and Avoid mode.

2. The method of claim 1, wherein operating the device in the Low Duty Cycle mode, to perform the requested high-throughput service, comprises maintaining a comparable quality of service experience to a user by at least one of: using a slower data exchange rate, increasing an amount of data compression, increasing an order of modulation, or rearranging a resource allocation among a plurality of other devices with which the device is communicating.

3. The method of claim 2, wherein rearranging the resource allocation among the plurality of other devices with which the device is communicating comprises at least on of: allocating most of a channel capacity to services having quality of service requirements or suspending best effort services.

4. An apparatus (111) for controlling operation of a device (100) that uses Ultra-Wideband modulation techniques, the apparatus (111) comprising:
logic configured to operate the device in a Low Duty Cycle mode (203) in which an amount of time during which the device is permitted to transmit a signal is limited, such that the device is permitted to engage in only limited activity when averaged over a second or an hour;
logic configured to ascertain whether a high-throughput service has been requested (205);
logic configured to respond to ascertaining that the high-throughput service has been requested by operating the device in a Detect and Avoid mode (215) in which the device is permitted to transmit continuously on a selected frequency band at a maximum output power to perform the requested high-throughput service until a victim service is detected operating on the selected frequency band (211), and **characterised by**:
logic configured to respond to the victim service being detected operating on the selected frequency band by again operating the device in the Low Duty Cycle mode to perform the requested high-throughput service while attempting to identify another frequency band in which to operate the device in the Detect and Avoid mode.

5. The apparatus (111) of claim 4 wherein operating the device in the Low Duty Cycle mode , to perform the requested high-throughput service, comprises maintaining a comparable quality of service experience to a user by at least one of: using a slower data exchange rate, increasing an amount of data compression, increasing an order of modulation, or rearranging a resource allocation among a plurality of other devices with which the device is communicating.

6. The apparatus (111) of claim 5, wherein rearranging the resource allocation among the plurality of other devices with which the device is communicating comprises at least one of allocating most of a channel capacity to services having quality of service requirements or suspending best effort services.

7. An Ultra-Wideband ,UWB, device (100) that utilizes UWB modulation techniques, the UWB device comprising:
transmission logic (101) configured to generate a signal to be transmitted from an antenna;
receive logic configured to supply a received signal derived from a signal supplied by the antenna; and
an apparatus according to any of claims 4-6.

8. The UWB device (100) of claim 7, wherein the UWB device is either a sensor that wirelessly communicates sensor data or a mobile user equipment.

## Patentansprüche

1. Verfahren zum Betreiben eines Geräts (100), das Ultrabreitband-Modulationstechniken einsetzt, wobei das Verfahren umfasst:
Betreiben des Geräts in einem Modus mit kurzer Einschaltdauer (203), in welchem eine Dauer von Zeit, während der das Gerät ein Signal senden darf, derart beschränkt ist, dass das Gerät über eine Sekunde oder eine Stunde gemittelt nur beschränkte Aktivität ausüben darf;
Bestimmen, dass ein Dienst mit hohem Durchsatz angefordert wurde (205);
Betreiben des Geräts in Reaktion auf das Bestimmen, dass der Dienst mit hohem Durchsatz angefordert wurde, in einem Detektieren- und Vermeiden-Modus (215), in welchem das Gerät auf einem ausgewählten Frequenzband bei maximaler Ausgangsleistung kontinuierlich senden darf, um den angeforderten Dienst mit hohem Durchsatz zu leisten, bis ein Opferdienst detektiert wird, der auf dem ausgewählten Frequenzband arbeitet (211), und
**gekennzeichnet durch**
Betreiben des Geräts in Reaktion auf das Detektieren des auf dem ausgewählten Frequenzband arbeitenden Opferdienstes im Modus mit kurzer Einschaltdauer, um den angeforderten Dienst mit hohem Durchsatz zu leisten, während versucht wird, ein anderes Frequenzband zum Betreiben des Geräts im Detektieren- und Vermeiden-Modus zu identifizieren.

2. Verfahren nach Anspruch 1, wobei das Betreiben des Geräts im Modus mit kurzer Einschaltdauer zum Leisten des angeforderten Dienstes mit hohem Durchsatz ein Aufrechterhalten eines Erlebnisses mit vergleichbarer Dienstqualität für einen Benutzer durch wenigstens eines umfasst von: Verwenden einer niedrigeren Datenaustauschrate, Erhöhen einer Menge von Datenkompression, Erhöhen einer Modulationsordnung oder Reorganisieren einer Ressourcenzuweisung unter einer Mehrzahl von anderen Geräten, mit welchen das Gerät kommuniziert.

3. Verfahren nach Anspruch 2, wobei das Reorganisieren der Ressourcenzuweisung unter der Mehrzahl von anderen Geräten, mit welchen das Gerät kommuniziert, mindestens eines umfasst von: Zuweisen des Großteils einer Kanalkapazität zu Diensten mit Dienstqualitätsanforderungen oder Aussetzen von Best-Effort-Diensten.

4. Vorrichtung (111) zum Steuern des Betriebs eines Geräts (100), das Ultrabreitband-Modulationstechniken einsetzt, wobei die Vorrichtung (111) umfasst:
Logik, die so konfiguriert ist, dass sie das Gerät in einem Modus mit kurzer Einschaltdauer betreibt (203), in welchem eine Dauer von Zeit, während der das Gerät ein Signal senden darf, derart beschränkt ist, dass das Gerät über eine Sekunde oder eine Stunde gemittelt nur beschränkte Aktivität ausüben darf;
Logik, die so konfiguriert ist, dass sie bestimmt, ob ein Dienst mit hohem Durchsatz angefordert wurde (205) ;
Logik, die so konfiguriert ist, dass sie auf das Bestimmen, dass der Dienst mit hohem Durchsatz angefordert wurde, durch Betreiben des Geräts in einem Detektieren- und Vermeiden-Modus reagiert (215), in welchem das Gerät auf einem ausgewählten Frequenzband bei maximaler Ausgangsleistung kontinuierlich senden darf, um den angeforderten Dienst mit hohem Durchsatz zu leisten, bis ein Opferdienst detektiert wird, der auf dem ausgewählten Frequenzband arbeitet (211), und
**gekennzeichnet durch**
Logik, die so konfiguriert ist, dass sie auf das Detektieren des auf dem ausgewählten Frequenzband arbeitenden Opferdienstes durch erneutes Betreiben des Geräts im Modus mit kurzer Einschaltdauer zum Leisten des angeforderten Dienstes mit hohem Durchsatz reagiert, während sie versucht, ein anderes Frequenzband zum Betreiben des Geräts im Detektieren- und Vermeiden-Modus zu identifizieren.

5. Vorrichtung (111) nach Anspruch 4, wobei das Betreiben des Geräts im Modus mit kurzer Einschaltdauer zum Leisten des angeforderten Dienstes mit hohem Durchsatz ein Aufrechterhalten eines Erlebnisses mit vergleichbarer Dienstqualität für einen Benutzer durch wenigstens eines umfasst von: Verwenden einer niedrigeren Datenaustauschrate, Erhöhen einer Menge von Datenkompression, Erhöhen einer Modulationsordnung oder Reorganisieren einer Ressourcenzuweisung unter einer Mehrzahl von anderen Geräten, mit welchen das Gerät kommuniziert.

6. Vorrichtung (111) nach Anspruch 5, wobei das Reorganisieren der Ressourcenzuweisung unter der Mehrzahl von anderen Geräten, mit welchen das Gerät kommuniziert, mindestens eines umfasst von: Zuweisen des Großteils einer Kanalkapazität zu Diensten mit Dienstqualitätsanforderungen oder Aussetzen von Best-Effort-Diensten.

7. Ultrabreitband, UWB,-Gerät (100), das UWB-Modulationstechniken einsetzt, wobei das UWB-Gerät umfasst:
Sendelogik (101), die zum Erzeugen eines Signals konfiguriert ist, das
von einer Antenne gesendet werden soll;
Empfangslogik, die so konfiguriert ist, dass sie ein Empfangssignal liefert, das von einem Signal abgeleitet ist, das durch die Antenne geliefert wird; und
eine Vorrichtung nach einem der Ansprüche 4 bis 6.

8. UWB-Gerät (100) nach Anspruch 7 wobei das UWB-Gerät entweder ein Sensor, der Sensordaten drahtlos kommuniziert, oder eine mobile Benutzereinrichtung ist.

## Revendications

1. Procédé de fonctionnement d'un dispositif (100) qui utilise des techniques de modulation de bande ultralarge, le procédé comprenant :
le fonctionnement du dispositif dans un mode à faible rapport cyclique (203) dans lequel une quantité de temps au cours de laquelle le dispositif est autorisé à transmettre un signal est limitée, de sorte que le dispositif ne soit autorisé qu'à effectuer une activité limitée en moyenne sur une seconde ou une heure ;
la détermination qu'un service à haut débit a été demandé (205) ;
en réponse à la détermination que le service à haut débit a été demandé, le fonctionnement du dispositif dans un mode de détection et d'évitement (215) dans lequel le dispositif est autorisé à transmettre en continu dans une bande de fréquences sélectionnée à une puissance de sortie maximale, pour exécuter le service à haut débit demandé, jusqu'à ce qu'il soit détecté qu'un service victime fonctionne dans la bande de fréquences sélectionnée (211), et
**caractérisé en ce que**
en réponse à la détection que le service victime fonctionne dans la bande de fréquences sélectionnée, le fonctionnement du dispositif dans le mode à faible rapport cyclique pour exécuter le service à haut débit demandé, tout en essayant d'identifier une autre bande de fréquences dans laquelle faire fonctionner le dispositif dans le mode de détection et d'évitement.

2. Procédé selon la revendication 1, dans lequel le fonctionnement du dispositif dans le mode à faible rapport cyclique pour exécuter le service à haut débit demandé comprend le maintien d'un niveau de qualité de service comparable pour un utilisateur par au moins l'un de : l'utilisation d'une vitesse d'échange de données inférieure, l'augmentation d'une quantité de compression de données, l'augmentation d'un ordre de modulation ou le réagencement d'une allocation de ressources parmi une pluralité d'autres dispositifs avec lesquels le dispositif est en communication.

3. Procédé selon la revendication 2, dans lequel le réagencement de l'allocation de ressources parmi la pluralité d'autres dispositifs avec lesquels le dispositif est en communication comprend au moins l'une de : l'allocation de la plupart d'une capacité de canal à des services ayant des exigences de qualité de service, ou la suspension de services de meilleurs efforts.

4. Appareil (111) de commande de fonctionnement d'un dispositif (100) qui utilise des techniques de modulation de bande ultralarge, l'appareil (111) comprenant :
une logique configurée pour effectuer le fonctionnement du dispositif dans un mode à faible rapport cyclique (203) dans lequel une quantité de temps au cours de laquelle le dispositif est autorisé à transmettre un signal est limitée, de sorte que le dispositif ne soit autorisé qu'à effectuer une activité limitée en moyenne sur une seconde ou une heure ;
une logique configurée pour effectuer la détermination si un service à haut débit a été demandé (205) ;
une logique configurée pour effectuer la réponse à la détermination que le service à haut débit a été demandé par le fonctionnement du dispositif dans un mode de détection et d'évitement (215) dans lequel le dispositif est autorisé à transmettre en continu dans une bande de fréquences sélectionnée à une puissance de sortie maximale, pour exécuter le service à haut débit demandé, jusqu'à ce qu'il soit détecté qu'un service victime fonctionne dans la bande de fréquences sélectionnée (211), et
**caractérisé par**
une logique configurée pour effectuer la réponse à la détection que le service victime fonctionne dans la bande de fréquences sélectionnée par le fonctionnement à nouveau du dispositif dans le mode à faible rapport cyclique pour exécuter le service à haut débit demandé, tout en essayant d'identifier une autre bande de fréquences dans laquelle faire fonctionner le dispositif dans le mode de détection et d'évitement.

5. Appareil (111) selon la revendication 4, dans lequel le fonctionnement du dispositif dans le mode à faible rapport cyclique pour exécuter le service à haut débit demandé comprend le maintien d'un niveau de qualité de service comparable pour un utilisateur par au moins l'un de : l'utilisation d'une vitesse d'échange de données inférieure, l'augmentation d'une quantité de compression de données, l'augmentation d'un ordre de modulation ou le réagencement d'une allocation de ressources parmi une pluralité d'autres dispositifs avec lesquels le dispositif est en communication.

6. Appareil (111) selon la revendication 5, dans lequel le réagencement de l'allocation de ressources parmi la pluralité d'autres dispositifs avec lesquels le dispositif est en communication comprend au moins l'une de : l'allocation de la plupart d'une capacité de canal à des services ayant des exigences de qualité de service, ou la suspension de services de meilleurs efforts.

7. Dispositif de bande ultralarge, UWB, (100) qui utilise des techniques de modulation UWB, le dispositif UWB comprenant :
une logique de transmission (101) configurée pour générer un signal à transmettre depuis une antenne ;
une logique de réception configurée pour fournir un signal reçu dérivé d'un signal fourni par l'antenne ; et
un appareil selon l'une quelconque des revendications 4 à 6.

8. Dispositif UWB (100) selon la revendication 7, dans lequel le dispositif UWB est soit un capteur qui communique sans fil des données de capteur soit un équipement d'utilisateur mobile.
